# EUROPÄISCHE PATENTSCHRIFT

(11) **EP 1 310 030 B1**
(45) Veröffentlichungstag und Bekanntmachung des Hinweises auf die Patenterteilung: **24.03.2004**
(21) Anmeldenummer: 01956368.3
(22) Anmeldetag: 17.07.2001
(51) Int. Cl.: H02H 7/085, H02H 6/00

(54) **VERFAHREN ZUR STEUERUNG UND REGELUNG EINER MOTORISCH ANGETRIEBENEN VERSTELLVORRICHTUNG**
METHOD FOR CONTROLLING AND ADJUSTING A MOTOR-DRIVEN ADJUSTING DEVICE
PROCEDE POUR COMMANDER ET REGULER LE FONCTIONNEMENT D'UN DISPOSITIF DE REGLAGE ENTRAINE PAR MOTEUR

(30) Priorität: 15.08.2000 DE 10042168
(43) Veröffentlichungstag der Anmeldung: 14.05.2003
(73) Patentinhaber: Brose Fahrzeugteile GmbH & Co. KG, Coburg, 96450 Coburg (DE)
(72) Erfinder: HEINRICH, Peter, 98553 Hinternah (DE); EICHHORN, Mike, 98693 Ilmenau (DE)
(74) Vertreter: Baumgärtel, Gunnar, Dr.
(86) Internationale Anmeldenummer: PCT/DE2001/002787
(87) Internationale Veröffentlichungsnummer: WO 2002/015359

(56) Entgegenhaltungen:
- DE-A- 19 840 164
- US-A- 5 585 702

## Beschreibung

Die Erfindung betrifft ein verfahren zur Steuerung und Regelung einer motorisch angetriebenen Verstellvorrichtung nach dem Oberbegriff des Anspruches 1. Das Verfahren ist insbesondere für die Steuerung eines motorisch angetriebenen Fensterhebers, einer Sitzverstellung oder eines Schiebedaches eines Kraftfahrzeugs geeignet.

Aus der DE 198 40 164 A ist eine Antriebsvorrichtung und ein Verfahren zum Verstellen eines zwischen zwei Stellungen beweglichen Fahrzeugteils gemäß dem Oberbegriff des Anspruchs 1 bekannt, bei der bzw. bei dem die momentane Krafteinwirkung auf das bewegliche Fahrzeugteil aus der Periodendauer des das bewegliche Fahrzeugteil antreibenden Elektromotors, aus Kraftänderungswerten, die aus Änderungen der Motordrehzahl berechnet werden, und aus den aufsummierten und über Gleichungssysteme, die an Hand eines mathematischen Modells der gesamten Verstellvorrichtung einschließlich des Antriebs erstellt wurden, gewichteten Kraftänderungswerten ermittelt wird, d.h. ausschließlich aus Werten, die vom Verhalten des Elektromotors abhängen. Die momentane Krafteinwirkung auf das bewegliche Fahrzeugteil wird als Kriterium für das Abschalten oder Reversieren des Elektromotors herangezogen, wobei bei der Berechnung der Kraftänderungswerte für jeden Drehzahländerungswert, der einen oberen Schwellwert übersteigt, der Wert dieses oberen Schwellwerts anstelle des Drehzahländerungswerts herangezogen wird.

Zur Begrenzung der Anzahl der zu erfassenden physikalischen Größen und der Häufigkeit der Abtastungen der physikalischen Größen wird die Periodendauer der Umdrehungen des elektromotorischen Antriebs mittels eines Magnetrades und zweier Hall-Sensoren erfasst und aus der erfassten Periodendauer in Verbindung mit verschiedenen, empirisch oder messtechnisch erfassten Parametern eine fein gerasterte Überwachung der Einklemmschutzkriterien durch Extrapolation der erfassten Periodendauer angestrebt. Dazu werden zur Bestimmung der momentanten Krafteinwirkung auf das bewegliche Fahrzeugteil die nur periodenweise zur Verfügung stehenden Messwerte der Periodendauer extrapoliert, wobei die bei der Extrapolationsformel verwendeten Parameter das Gesamtsystem der Antriebsvorrichtung modellieren und durch die Federsteifigkeiten, Dämpfungen und Reibungen des Gesamtsystems bestimmt sind. Dadurch werden spektrale Anteile des Periodenzeitverlaufs, die von Vibrationen herrühren, schwächer bewertet als solche, die von einem Einklemmfall herrühren. Aus den so bestimmten Schätzwerten für die Periodendauer wird dann die Drehzahländerung zu einem Zeitpunkt, bezogen auf den vorhergehenden Zeitpunkt unter Verwendung eines Motorspannungsfilters und eines Wegprofilfilters abgeschätzt, um Einflüsse der Motorspannung und der Position des beweglichen Fahrzeugteils auf die Motordrehzahl zu eliminieren.

Die für die Elimination der Motorspannung und Position des beweglichen Fahrzeugteils auf die Motordrehzahl verwendeten Größen bilden u.a. das dynamische Verhalten des Motors bei Spannungsänderungen nach. Eine weitere Korrektur wird dadurch vorgenommen, dass die abgeschätzten Drehzahländerungen mit einer festgesetzten zeitlich konstanten Untergrenze verglichen werden. Sobald die abgeschätzten Drehzahländerungen diese Untergrenze übersteigen, werden sie mit einem Proportionalitätsfaktor multipliziert, der die Steilheit der Motorkennlinie des Elektromotors wiedergibt.

Um diese Einflüsse zu eliminieren, wird durch einen Temperaturfühler die Umgebungstemperatur erfasst und die Motortemperatur über die Erfassung der Betriebsdauer genähert ermittelt.

Bei dem aus der DE 198 40 164 A bekannten Verfahren wird somit die Drehzahl bzw. Periodendauer des mit dem beweglichen Fahrzeugteil gekoppelten Elektromotors erfasst und mit unterschiedlichen, empirisch ermittelten Parametern zur Bildung eines Kriteriums für den Einklemmschutz verknüpft.

Aus der US-A-5 585 702 ist eine Steuereinrichtung für eine Verstellvorrichtung eines Kraftfahrzeugs bekannt, die zwei Positionssensoren, einen Temperatursensor, einen den Motorstrom erfassenden Stromsensor und einen Mikroprozessor aufweist, der zusätzlich mit einem Steuerschalter verbunden ist und die elektrische Verbindung des Verstellmotors mit einer Spannungsquelle in Abhängigkeit von der Stellung des Steuerschalters und den von den Sensoren abgegebenen Sensorsignalen steuert. Aus den Sensorsignalen des Stromsensors und des Temperatursensors berechnet der Mikroprozessor eine temperaturkompensierte Verstellkraft der Verstellvorrichtung an vorbestimmten Schließpositionen der Verstellvorrichtung. Durch einen Vergleich der temperaturkompensierten Verstellkraft mit einem Referenzwert wird der Verstellmotor reversiert, wenn die temperaturkompensierte Verstellkraft größer ist als der Referenzkraftwert.

Aus der DE 40 20 351 C2 ist ein Verfahren zur Steuerung einer Fensterscheibe eines Kraftfahrzeuges bekannt, bei dem ein Korrekturverfahren angewendet wird, um ein Binklemmschutzkriterium abzuleiten, mit dem ein zu frühes Ansprechen einer Einklemmschutzvorrichtung verhindert werden soll. Zu diesem Zweck versorgt eine erste Sensoreinrichtung eine Steuerelektronik mit ursächlich mit dem Aggregat zusammenhängenden Signalen wie Bordspannung, Fensterhebergeschwindigkeit, Drehmoment des Antriebs, Scheibengewicht usw., während ein zweites Sensorelement die Steuerelektronik mit ursächlich nicht mit dem Aggregat zusammenhängenden Signalen versorgt, nämlich mit auf die Karosserie einwirkenden Beschleunigungskräften. Um ein fälschliches Abschalten oder Reversieren zu verhindern, werden die Signale des zweiten Sensorelements als Grundpegel verwendet und die Signale der ersten Sensoreinrichtung unter Sicherheitsaspekten bewertet.

Die aus dem Stand der Technik bekannten Verfahren wenden somit eine feine Rasterungen bei der Drehzahlerfassung bzw. Erfassung von Drehzahländerungen sowie Filterfunktionen zur Eingrenzung bzw. Verschärfung eines Einklemmschutzkriteriums an, um somit die Gefahr von Fehlauslösungen des Einklemmschutzes zu verringern.

Ausgehend von diesem Stand der Technik liegt der Erfindung die Aufgabe zugrunde, ein Verfahren zur Steuerung und Regelung einer motorisch angetriebenen Verstellvorrichtung der eingangs genannten Art anzugeben, das unter allen Betriebsbedingungen eine möglichst geringe Belastung der Verstelleinrichtung sowie einzelner Bauteile der Verstellvorrichtung auch unter Berücksichtigung von Einklemmvorgängen bzw. eines vorgesehenen Einklemmschutzes gewährleistet.

Diese Aufgabe wird erfindungsgemäß durch ein Verfahren mit den Merkmalen des Anspruches 1 gelöst.

Durch die Erfassung relevanter Eingangsgrößen der Verstellvorrichtung werden mit Hilfe des mathematischen Modells der Verstellvorrichtung die Zusammenhänge zwischen den jeweiligen Kraftkomponenten des Verstellsystems berücksichtigt und daraus ein sehr genaues Berechnen der Belastung der Verstellvorrichtung bzw. des motorischen Antriebs und damit auch der Einklemmkraft ermöglicht. Unter dem Begriff "Verstellvorrichtung" sind dabei sämtliche Komponenten eines Verstellsystems zu verstehen, die für den Betrieb einer Verstellvorrichtung notwendig sind, beispielsweise die Fensterscheibe als zu verstellendes Bauteil, die Scheibenführungen, die Führungsschienen, Dichtungselemente, der elektromotorische Antrieb und die Aggregate zur Weiterleitung der Antriebskraft.

Die Eingangsgrößen des Verstellsystems ergeben sich unter anderem aus den sich verändernden Umweltverhältnissen wie Temperatur, Feuchtigkeit oder Druck, deren Veränderung für den Betrieb der Verstellvorrichtung eine entsprechende Veränderung der aufzubringenden Verstellkraft nach sich zieht. Über die aufzubringende Verstellkraft wird die zu dem jeweiligen Zeitpunkt tolerierbare Einklemmkraft ermittelt, so daß sehr präzise reagiert werden kann, wenn ein Einklemmfall vorliegt und der Antrieb angehalten bzw. reversiert werden soll.

Es werden alle für ein Einklemmschutzkriterium oder für die Belastung des Gesamtsystems relevanten, unterschiedlichen physikalischen Eingangsgrößen, die gemessen oder errechnet werden, in jeweils einem den Eingangsgrößen zugeordneten statischen oder dynamischen Gleichungssystem bewertet und in eine die momentane Eingangsgröße in Bezug auf das Gesamtsystem repräsentierende Kraftkomponente umgesetzt, so dass sämtliche parallel zueinander ermittelten Kraftkomponenten in einen Gesamt-Kräftevergleich einfließen können und die Gesamtkraft mit einer maximalen Einklemmkraft oder einer maximalen Belastungskraft verglichen werden kann.

Dabei ist es durch die Berechnung der Einklemmkraft mittels des mathematischen Modells der Verstellvorrichtung möglich, auch Eingangsgrößen zu berücksichtigen, die bislang nicht sensorisch erfaßbar waren oder nur unter hohem Aufwand zu ermitteln und in die herkömmliche Steuerung der Verstellvorrichtung einzubeziehen gewesen sind. So können sämtliche in dem Modell erfaßten Eingangsgrößen des Systems berücksichtigt und gegebenenfalls hinsichtlich der Intensität der Einwirkung auf das Gesamtsystem bewertet werden. Die aktuelle also kontinuierliche oder häufige Bestimmung der Eingangsgrößen gewährleistet, daß die maximal zulässige Einklemmkraft mit einer hohen Präzision vorbestimmt werden kann, wodurch eine fehlerhafte Auslösung des Einklemmschutzes und Überlastung des Antriebes bzw. der Verstellvorrichtung vermieden wird.

Dies hat zur Folge, daß eine sehr genaue Auslegung der jeweiligen Komponenten, beispielsweise der Getriebeelemente, der Anschläge oder der Aufnahmen der Verstellvorrichtung. an der Fahrzeugkarosserie, erfolgen kann, wodurch insgesamt eine leichtere und kostengünstige Bauweise erzielt werden kann.

Eine einfache Art und Weise der Berechnung der vom motorischen Antrieb erzeugten Kraft besteht darin, diese auf der Basis der Drehzahl und der Ansteuerung des elektromotorischen Antriebs zu ermitteln, da diese Größen einfach und genau ermittelt werden können.

Weiterhin können die Parameter des mathematischen Modells zumindest zu einem Teil auf der Basis der aktuell erfaßten Eingangsgrößen oder der zeitabhängigen Verläufe der Eingangsgrößen ermittelt werden. Auf diese Weise wird gewährleistet, daß die realen Bedingungen, unter denen der Antriebsmotor arbeitet, erfaßt werden und zur Grundlage der Berechnung gemacht werden. Alternativ zu der aktuellen Erfassung der Daten können die einmal gemessenen oder errechneten Verläufe der Eingangsgrößen über einen vorgebbaren Zeitraum ermittelt und zur Grundlage der Berechnung gemacht werden. Beispielsweise können Temperaturerhöhungen während eines längeren Betriebszeitraumes oder die Alterung von Dichtungen und Verschleiß sowie die daraus sich ergebenden Veränderungen im Reibungsverhalten berücksichtigt werden.

In einer weiteren Variante ist vorgesehen, daß zumindest ein Teil der Parameter des mathematischen Modells auf der Basis empirisch ermittelter Daten festgelegt wird. Auf diese Weise wird der Rechenaufwand reduziert, wenn sich nicht oder nur in geringem Maße verändernde Parameter aufgrund einer Testmessung ermittelt und festgelegt werden. Eine solche Testmessung ist beispielsweise bei Elektromotoren vorzunehmen, die zwar eine gewisse Fertigungsstreuung aufweisen, jedoch über ihren Betriebszeitraum hinweg wenig Veränderungen in ihrem Arbeitsverhalten zeigen.

Weiter ist vorgesehen, daß zusätzlich die Temperatur als Binflußgröße auf wenigstens einen der Parameter des mathematischen Modells verarbeitet wird, da sich die Temperatur in einem relativ weiten Bereich verändern kann und große Auswirkungen hinsichtlich des Reibungsverhaltens der jeweiligen Einzelkomponenten bewirkt.

Zur Festlegung der Belastungsgrenze ist es zweckmäßig, empirisch ermittelte Daten oder theoretische Belastungsberechnungen bezüglich der mechanischen Komponenten des Antriebes zu verwenden, um eine möglichst genaue Informationslage hinsichtlich der mechanischen Festigkeiten und der Belastbarkeit der jeweiligen Bauteile zu erhalten. Bei den empirischen Daten können Versuche verwertet und ausgewertet werden, die im Rahmen der Konstruktion und der Abnahme der Verstelleinrichtung durchgeführt wurden. Die theoretischen Belastungsberechnungen, die beim Entwerfen der Komponenten oder als hinterlegte Daten bei einer CAD-Zeichnung vorliegen, können somit einfach in das mathematische Modell des Antriebs übernommen werden.

Da die Temperatur eine leicht zu ermittelnde Größe ist, die zudem vielfältige Rückschlüsse hinsichtlich der Betriebsbedingungen und insbesondere der Reibungsverhältnisse zuläßt, kann die Belastungsgrenze in Abhängigkeit von der Temperatur wenigstens eines Teiles der Verstellvorrichtung ermittelt werden.

Zur optimalen Anpassung der Motorleistung an die Betriebsbedingungen ist es vorgesehen, daß die Belastungsgrenze für jeden Verstellvorgang neu ermittelt wird. Dadurch wird sichergestellt, daß eine Überlastung des Antriebs beziehungsweise der Verstellvorrichtung aufgrund einer vormals festgelegten, nicht mehr aktuellen Belastungsgrenze auftritt.

Um die Präzision des Verfahrens zu erhöhen, kann die Belastungsgrenze während des Verstellvorgangs kontinuierlich ermittelt werden. Auf diese Weise kann auch auf Veränderungen während des Verstellvorganges reagiert werden.

Zusätzlich oder alternativ kann die Temperatur wenigstens einen Teiles der Verstellvorrichtung gemessen werden, um über den aktuellen Zustand der Verstelleinrichtung Informationen zu erhalten. Alternativ dazu ist vorgesehen, daß als Temperatur eines Verstellteiles eine an einem Ort mit vergleichbaren Bedingung gemessene Temperatur festgelegt wird. Auf diese Weise wird eine Temperaturerfassung aller Teile oder eines Teils der Komponenten der Verstellvorichtung unnötig, da aus der gemessenen Temperatur an der einen Stelle auf die Temperatur und das Verhalten des gesamten Bauteils bzw. der Komponenten geschlossen werden kann.

Das erfindüngsgemäße Verfahren berücksichtigt bei der Festlegung der Belastungsgrenze auch den Betrag der Streuung der über das mathematische Modell berechneten aktuellen Belastung. Da bei der Berechnung der Belastungsgrenze immer eine Ungenauigkeit der Messung, eine Streuung der Fertigungsgenauigkeit der Einzelkomponenten und die grundsätzlich zu erwartende Streuung zu berücksichtigen sind, ist die errechnete aktuelle Belastung mit einer Ungenauigkeit behaftet. Diese Ungenauigkeit, die sowohl positiv als auch negativ von dem errechneten Wert abweichen kann, wird aus Sicherheitsgründen dementsprechend als absoluter Betrag berücksichtigt und der berechneten Belastung zugeschlagen, so daß eine Sicherheit gegen eine zu geringe Antriebsleistung gegeben ist.

Neben statischen Anteilen des mathematischen Modells ist in einer Ausgestaltung vorgesehen, daß das mathematische Modell einen dynamischen Anteil aufweist, der die Einflüsse beim Beschleunigen und Abbremsen der Verstellvorrichtung bzw. des motorischen Antriebs berücksichtigt. Wird beispielsweise eine Verstellbewegung eingeleitet, kann es aufgrund der Haftreibung und der Trägheitskräfte der zu verstellenden Komponenten zu einer kurzfristigen Erhöhung der aufzubringenden Verstellkraft kommen, wodurch bei einer sehr empfindlich eingestellten Einklemmschutzvorrichtung ein fälschliches Reversieren eingeleitet werden kann. Durch eine entsprechende Berücksichtigung des dynamischen Anteils in dem mathematischen Modell wird ein sicherer und genauer Betrieb der Verstellvorrichtung gewährleistet.

Darüber hinaus ist vorgesehen, daß das mathematische Modell des motorischen Antriebs einen Anteil aufweist, der durch die konstruktiven und physikalischen Einflüsse geprägt ist, also beispielsweise durch die Eigenschaften des Antriebsmotors, die Anordnung der zu verstellenden Aggregate, die Reibungsverhältnisse und Wirkungsgrade der Getriebe und dergleichen.

In einer Weiterbildung der Erfindung ist vorgesehen, daß das mathematische Modell einen Anteil aufweist, der das reale Kennfeld des eingesetzten motorischen Antriebs repräsentiert. Dabei wird ein Motormodell erstellt, in das die entsprechenden gemessenen Größen des jeweils eingesetzten Antriebsmotors eingegeben werden. So wird für jeden Antriebsmotor oder für jeden Motorentyp ein reales Kennfeld ermittelt, das dem mathematischen Modell der Verstellvorrichtungs beigefügt wird. Eine Berücksichtigung der realen Kennfelder der Motoren ist vorteilhaft, da zum Teil erhebliche Streuungen innerhalb einer Fertigung auftreten und mit einer Berücksichtigung der realen Leistungsfähigkeit der Antriebsmotoren in dem jeweiligen Drehzahlbereich eine anderenfalls erforderliche Überdimensionierung verhindert werden kann.

Weitere Vorteile der Erfindung werden in der folgenden detaillierten Beschreibung eines Ausführungsbeispiels anhand der Figuren verdeutlicht.

Es zeigen:
- Figur 1 -: eine schematische Darstellung zur Bestimmung der Belastungsgrößen einer Verstellvorrichtung;
- Figur 2 -: eine schematische Darstellung gemäß Figur 1 ohne Berücksichtigung der Vertikalbeschleunigung;
- Figur 3 -: eine schematische Darstellung gemäß Figur 2 mit Berücksichtigung der statischen anstelle der dynamischen Eigenschaften des Antriebsmotors, sowie
- Figur 4 -: eine schematische Darstellung gemäß Figur 3 ohne Berücksichtigung konstruktiv bedingter Schwergängigkeiten von Komponenten der Verstellvorrichtung.

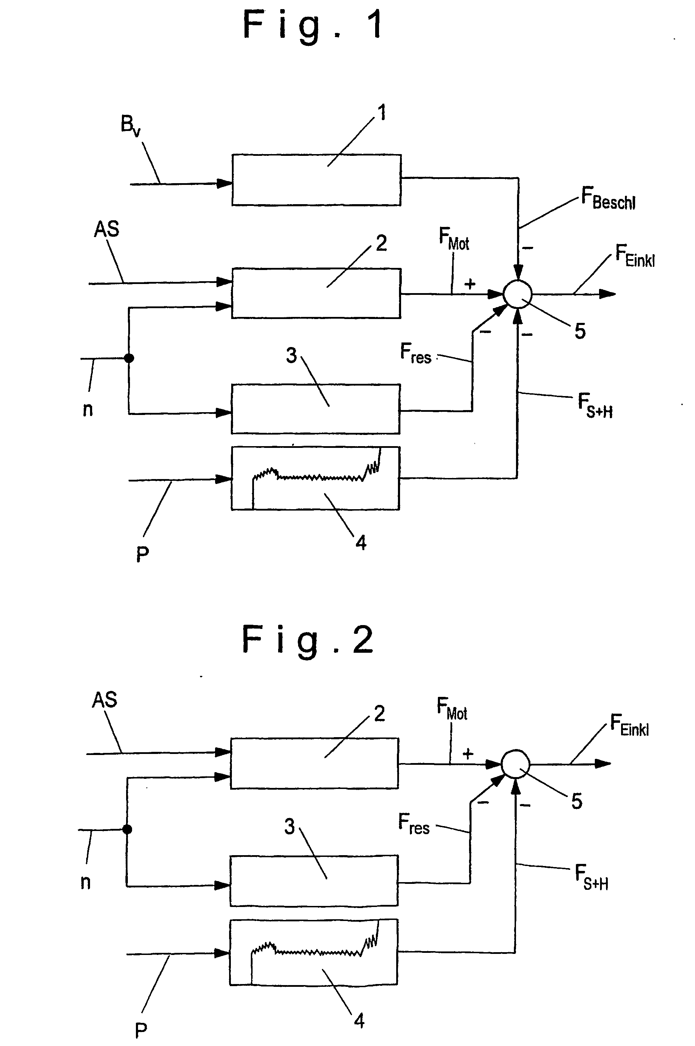

Figur 1 zeigt eine schematische Darstellung zur Bestimmung der Belastung einer Verstellvorrichtung, bei der als resultierende Größe eine Einklemmkraft F_{Einkl} bestimmt wird. Dabei werden zunächst Eingangs- oder Zustandsgrößen generiert, sei es durch Messungen oder durch Berechnungen, und diese Eingangs- oder Zustandsgrößen werden jeweils einem dynamischen Gleichungssystem 1 bis 3 zugeführt. In den dynamischen Gleichungssystemen 1 bis 3, die anhand eines mathematischen Modells der Verstellvorrichtung einschließlich des Antriebs erstellt wurden, werden Kraftkomponenten errechnet, die zu einer Erhöhung oder Verringerung der Gesamtbelastung der Verstellvorrichtung oder einzelner Komponenten des Verstellsystems beitragen.

Die einzelnen Kraftkomponenten werden zusammengeführt und ergeben die Zielgröße, in dem vorliegenden Fall die maximal zulässige Einklemmkraft F_{Einkl}· Wird diese Einklemmkraft F_{Einkl} erreicht, wird der Antrieb abgeschaltet oder reversiert, so daß einerseits nur eine vorgegebene Belastung auf die Verstellvorrichtung ausgeübt werden kann und andererseits ein Einklemmen oder Abtrennen von Gliedmaßen oder Gegenständen durch die Verstellvorrichtung vermieden wird. Nachfolgend wird anhand eines Fensterhebers das Verfahren und die in Figur 1 gezeigte schematische Darstellung erläutert.

Zur Berechnung der Kraftkomponenten werden gemäß Figur 1 als Eingangsgrößen die vertikale Beschleunigung Bᵥ der zu verstellenden Einrichtung, also beispielsweise einer Fensterscheibe und die übrigen bewegten Bauteile eines Fensterhebers, das Ansteuersignal AS des Motors, die Motordrehzahl n sowie die Position P der zu verstellenden Einrichtung (Fensterscheibe) eingegeben.

Aus der vertikalen Beschleunigung Bᵥ der Fensterscheibe wird unter Berücksichtigung der zu verstellenden Masse mittels eines ersten dynamischen GLeichungssystems 1 die Beschleunigungekraft F_{Beschl} ermittelt, die mit negativem Vorzeichen in die an einem Vergleichspunkt 5 gebildete Kräftebilanz eingeht. Als vertikale Beschleunigungskraft Bᵥ ist dabei insbesondere diejenige Kraftkomponente anzusehen, die bei einem Befahren einer Schlechtwegstrecke auf die Verstellvorrichtung einwirkt. Die durch das Befahren einer solchen Fahrbahn auftretenden und auf die Fahrzeugkarosserie einwirkenden vertikalen Beschleunigungskräfte könnten zu einer falschen Bestimmung der Gesamtbelastung beziehungsweise der Gesamtkraft führen.

Eine zeitliche Verzögerung bei der Bestimmung der vertikalen Beschleunigungskraft Bᵥ kann durch die Einbaulage des aufnehmenden Sensors und durch eine Federwirkung aufgrund einer elastischen Komponente bei der mechanische Konstruktion der Verbindung der Fensterscheibe mit den Getriebeelementen auftreten. Diese Verzögerung bei der Erfassung wird entsprechend berücksichtigt.

Die Motorkraftkomponente F_{Mot} errechnet sich aus der dimensionslosen Größe der Anteuerungssignale AS des Antriebsmotors, das beispielsweise als pulsweitenmoduliertes Signal zur Verfügung gestellt wird, sowie der Drehzahl n des Motors. Bei der Berechnung der Motorkraftkomponente F_{Mot} mittels eines zweiten dynamischen GLeichungssystems 2 werden Motorkonstanten berücksichtigt, die die Induktivität des Rotors und den Widerstand des Rotors sowie geometrische Bedingungen des Antriebs und das Motormoment berücksichtigen. Die Motorkraftkomponente F_{Mot} geht mit positivem Vorzeichen in die Kräftebilanz ein, da sie einen unterstützenden Beitrag zur Bewegung der Fensterscheibe liefert.

Ebenfalls aus der Drehzahl n wird die resultierende Kraft Fᵣₑₛ über ein als Hochpaß ausgebildetes drittes dynamisches GLeichungssystem 3 ermittelt, das eine mechanische Zeitkonstante und eine Gleitreibungskonstante berücksichtigt, wodurch Reibungseffekte bei der Gleitreibung und Massenträgheitseffekte in die Betrachtung einbezogen werden. Die resultierende Kraft Fᵣₑₛ geht mit negativem Vorzeichen in den Kräftevergleich am Vergleichsglied 5 ein, da sie keinen unterstützenden Beitrag zur Bewegung der Fensterscheibe liefert.

Schließlich wird die positionsabhängige Haftreibungskraftkomponente F_{S+H} mit negativem Vorzeichen in den Kräftevergleich eingebracht, die durch eine Referenzfahrt ermittelt wird. Die Haftreibungskraftkomponente F_{S+H} ist abhängig von der Scheibenposition P, da an verschiedenen Stellen unterschiedliche Haftreibungsbedingungen herrschen, und ihr Verlauf wird auf der Basis einer Referenzfahrt in einer Tabelle 4 hinterlegt. Ebenfalls wird in dieser Komponente das Scheibengewicht als ein konstanter Faktor bzw. Parameter berücksichtigt.

Aus den Einzelkraftkomponenten wird eine Gesamtkraft errechnet, wobei in dem Beispiel der Fensterscheibe diejenige Kraft ermittelt wird, die auf das System der Verstellvorrichtung einwirken muß, um die Fensterscheibe dicht und fest abzuschließen, beziehungsweise diejenige Kraft, die auf einen Gegenstand oder ein Körperteil in einem Einklemmfall maximal aufgebracht werden darf. Nachfolgend wird diese Kraft als Einklemmkraft F_{Einkl} bezeichnet.

Das Verfahren basiert somit auf der Bestimmung der Gesamtkraft auf der Grundlage einer Bilanz der Einzelkraftkomponenten. In die Berechnung der Gesamtkraft fließen demnach sämtliche systembedingten und äußeren Einflüsse ein, wodurch eine sehr präzise Ermittlung der benötigten bzw. zulässigen Kraft und damit der Gesamtbelastung der Verstellvorrichtung ermöglicht wird. Wird diese errechnete Kraft überschritten, was durch verschiedene Sensoren erfaßt werden kann, wird der Antrieb abgeschaltet oder reversiert, je nach Einsatzgebiet oder Drehrichtung der Verstellvorrichtung. Bei einem Fensterheber wird bei einer Schließbewegung das Reversieren und bei einer Öffnungsbewegung das Anhalten sinnvoll sein, da im ersten Fall eine Einklemmsituation wahrscheinlicher ist und im zweiten Fall eine Überlastung oder das Einlaufen in einen Endanschlag.

Wird bei der Berechnung der Belastung der Verstellvorrichtung eine zusätzliche Masse zu berücksichtigen sein, beispielsweise die Masse eines Fahrgastes auf einem Fahrzeugsitz, so wird diese ebenfalls mit der Erdbeschleunigung zu multiplizieren und negativ in die Bilanz aufzunehmen sein.

Insbesondere aufgrund von Temperaturschwankungen oder Alterungsprozessen können sich die Parameter des mathematischen Modells, auf dessen Grundlage die jeweiligen Kraftkomponenten errechnet werden, ändern. Diese Parameter werden entweder im Verlauf der Benutzung der Verstellvorrichtung abgeglichen oder es werden die Alterung und die Temperaturveränderungen aufgrund der Gebrauchsdauer der Verstellvorrichtung, also sowohl der Gesamtgebrauchsdauer hinsichtlich der Alterung als auch der gegenwärtigen Gebrauchsdauer der Verstellvorrichtung abgeschätzt oder aufgrund von gespeicherten Meßwerten abgerufen.

Figur 2 zeigt eine Vereinfachung des Verfahrens, bei dem die Bestimmung der Einklemmkraft F_{Einkl} im wesentlichen wie vorstehend anhand der Figur 1 beschrieben durchgeführt wird. Jedoch wird bei diesem Rechenmodell auf die Erfassung der vertikalen Beschleunigung Bᵥ beim Befahren einer Schlechtwegstrecke und damit auf das erste dynamische GLeichungssystem 1 und die sich daraus ergebende Beschleunigungskraft F_{Beschl} verzichtet.

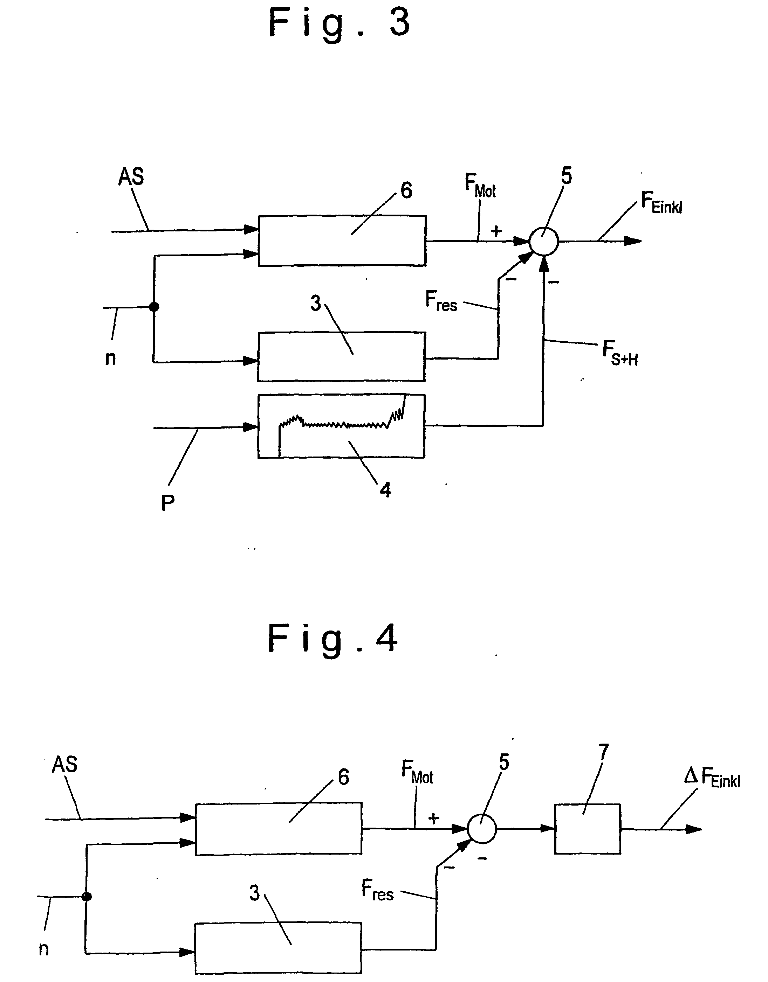

Eine weitere Vereinfachung des mathematischen Modells besteht gemäß Figur 3 darin, die dynamischen Eigenschaften des Antriebsmotors zu vernachlässigen und stattdessen das dynamische Gleichungssystem 2 zur Berechnung der Motorkraft F_{Mot}, bei dem veränderbare Parameter vorliegen, durch ein statisches Gleichungssystem 6 zu ersetzen. Ein solches System kann dann angenommen werden, wenn dynamische Größen wie z.B. die Induktionsspannung vernachlässigbar sind. Das statische Gleichungssystem 6 wird mit den Eingangsgrößen Drehzahl n und Ansteuersignal AS beaufschlagt und daraus die Motorkraft F_{Mot} berechnet.

Ein solches statisches Gleichungssystem ist beispielsweise dann sinnvoll einsetzbar, wenn die elektrische Zeitkonstante im Verhältnis zur mechanischen Zeitkonstante sehr klein ist. Die elektrische Zeitkonstante ergibt sich aus dem Quotienten der Induktivität zum Widerstand und die mechanische Zeitkonstante aus dem Quotienten der Summe der Trägheitsmomente zur Geometrie des Antriebes.

In Figur 4 ist ein stark vereinfachtes mathematisches Modell dargestellt, bei dem die Bestimmung der Einklemmkraft F_{Einkl} oder der maximal zulässigen Belastung der Verstellvorrichtung ohne Kenntnis der konstruktiven Schwergängigkeiten, der vertikalen Beschleunigung, der Vernachlässigung der dynamischen Eigenschaften des Antriebsmotors und gegebenenfalls des Gewichtes eines Nutzers der Verstellvorrichtung erfolgt.

Die konstruktiven Schwergängigkeiten ergeben sich beispielsweise aus der Reibung von Dichtungen, Materialpaarungen oder Verspannungen, die durch die Montage oder aufgrund der Konstruktion innerhalb der Verstellvorrichtung vorliegen. In diesem Fall wird eine maximal zu erwartende Schwergängigkeit wie bei dem mathematischen Modell gemäß Figur 3 angenommen. Auf eine Erfassung der Position P der zu verstellenden Einrichtung wird verzichtet und stattdessen die aus der Motorkraft F_{Mot} und der resultierenden Kraft Fᵣₑₛ errechnete Kraft durch einen Hochpaß 7 geleitet und die Größe F_{Einkl} ausgegeben, wobei der Vorteil der Vereinfachung der Berechnung der Größe mit einer Verringerung der Auflösung und der Genauigkeit einhergeht.

Allen vorstehend beschriebenen Verfahren ist gemeinsam, daß als Zielgröße eine maximal zulässige Belastung errechnet wird, die mit der gemessenen Kraft der Verstellvorrichtung verglichen wird. Die zulässige Belastung wird durch eine Kräftebilanz auf der Basis eines mathematischen Modells der Verstellvorrichtung ermittelt, wobei in dem Modell alle wesentlichen Einflußgrößen der verschiedenen Bereiche als Parameter vorliegen. Diese Parameter werden entweder errechnet, gemessen oder autoadaptiv erfaßt.

Die modulare Struktur erlaubt es, daß das Verfahren in verschiedenen Bereichen und an verschiedenen Verstellvorrichtungen eingesetzt wird, je nach Art der Verstellung, der Möglichkeiten der Erfassung der Parameter und der Auswertung vorhandener Versuchsdaten.

## Patentansprüche

1. Verfahren zur Steuerung und Regelung einer motorisch angetriebenen Verstellvorrichtung, insbesondere eines Fensterhebers, einer Sitzverstellung oder eines Schiebedaches, eines Kraftfahrzeuges mit einem Einklemmschutz, wobei Eingangsgrößen des motorischen Antriebs kontinuierlich erfaßt werden und über Gleichungssysteme, die an Hand eines mathematischen Modells der gesamten Verstellvorrichtung einschließlich des Antriebs erstellt wurden,die aktuelle Belastung der Verstellvorrichtung oder des motorischen Antriebs bestimmt und bei einer Überschreitung einer vorgegebenen Belastungsgrenze der motorische Antrieb abgeschaltet oder auf einen Wert unterhalb der Belastungsgrenze geregelt wird,
**dadurch gekennzeichnet,**
**dass** die kontinuierlich erfassten Eingangsgrößen in einzelne zu einer Erhöhung oder Verringerung der Gesamtbelastung (F_{Einkl}) der Verstellvorrichtung oder einzelner Komponenten der Verstellvorrichtung beitragende Kraftkomponenten (F_{Mot}, F_{Beschl}, Fᵣₑₛ, F_{S+H}) umgewandelt werden, die mit einem Vorzeichen in die Bestimmung der aktuellen Gesamtbelastung (F_{Einkl}) der Verstellvorrichtung oder des Antriebs eingehen, das davon abhängt, ob die jeweilige Kraftkomponente (F_{Mot}, F_{Beschl}, Fᵣₑₛ, F_{S+H}) die Verstellbewegung der Verstellvorrichtung oder des Antriebs unterstützt oder der Verstellbewegung der Verstellvorrichtung oder des Antriebs entgegenwirkt.

2. Verfahren nach Anspruch 1, **dadurch gekennzeichnet, dass** als eine Eingangsgröße die Drehzahl (n) eines als Elektromotor ausgebildeten Antriebs sowohl an ein als Hochpass ausgebildetes drittes dynamisches Gleichungssystem (3), das eine mechanische Zeitkonstante und eine Gleitreibungskonstante berücksichtigt, als auch zusammen mit einem Ansteuersignal (AS) des Elektromotors als Eingangsgröße an ein statisches Gleichungssystem (6) abgegeben wird und dass die von dem dritten dynamischen Gleichungssystem (3) abgegebene Kraftkomponente (Fᵣₑₛ) mit negativem Vorzeichen und die vom statischen Gleichungssystem (6) abgegebene Motorkraftkomponete (F_{Mot}) mit positivem Vorzeichen einem Vergleichsglied (5) zugeführt werden.

3. Verfahren nach Anspruch 2, **dadurch gekennzeichnet, dass** das Vergleichsglied (5) mit einem Hochpass (7) verbunden ist, der die maximal zulässige Einklemmkraft (F_{Einkl}) abgibt.

4. Verfahren nach Anspruch 2, **dadurch gekennzeichnet, dass** eine die Position der zu verstellenden Einrichtung entsprechende Eingangsgröße (P) einem eine Tabellenfunktion enthaltenden dynamischen Gleichungssystem (4) eingegeben wird, das eine positionsabhängige Haftreibungskraftkomponente (F_{S+H}) mit negativem Vorzeichen an das Vergleichsglied (5) abgibt, von dem die maximal zulässige Einklemmkraft (F_{Einkl}) abgegeben wird.

5. Verfahren nach Anspruch 1, **dadurch gekennzeichnet, dass** als Eingangsgröße die Drehzahl (n) eines als Elektromotor ausgebildeten Antriebs sowohl an ein als Hochpass ausgebildetes drittes dynamisches Gleichungssystem (3), das eine mechanische Zeitkonstante und eine Gleitreibungskonstante berücksichtigt, als auch zusammen mit einem Ansteuersignal (AS) des Elektromotors als Eingangsgröße an ein zweites dynamisches Gleichungssystem (2) abgegeben wird, dass die von dem dritten dynamischen Gleichungssystem (3) abgegebene Kraftkomponente (Fᵣₑₛ) mit negativem Vorzeichen und die vom zweiten dynamischen Gleichungssystem (2) abgegebene Motorkraftkomponete (F_{Mot}) mit positivem Vorzeichen einem Vergleichsglied (5) zugeführt werden, dass eine die Position der zu verstellenden Einrichtung entsprechende Eingangsgröße (P) einem eine Tabellenfunktion enthaltenden vierten dynamischen Gleichungssystem (4) eingegeben wird, das eine positionsabhängige Haftreibungskraftkomponente (F_{S+H}) mit negativem Vorzeichen an das Vergleichsglied (5) abgibt, von dem die maximal zulässige Einklemmkraft (F_{Einkl}) abgegeben wird.

6. Verfahren nach Anspruch 5, **dadurch gekennzeichnet, dass** eine die vertikale Beschleunigung der Fensterscheibe erfassende Eingangsgröße (B_{V}) einem die zu verstellende Masse berücksichtigenden ersten dynamischen Gleichungssystem (1) zugeführt wird, das eine Beschleunigungskraftkomponente F_{Beschl} mit negativem Vorzeichen an das Vergleichsglied (5) abgibt.

7. Verfahren nach einem der voranstehenden Ansprüche, **dadurch gekennzeichnet, daß** zumindest ein Teil der Parameter des mathematischen Modells auf der Basis der aktuell erfaßten Eingangsgrößen oder der zeitabhängigen Verläufe der Eingangsgrößen ermittelt wird.

8. Verfahren nach einem der voranstehenden Ansprüche, **dadurch gekennzeichnet, daß** zumindest ein Teil der Parameter des mathematischen Modells auf der Basis empirisch ermittelter Daten festgelegt wird.

9. Verfahren nach einem der voranstehenden Ansprüche, **dadurch gekennzeichnet, daß** bei der Festlegung der Belastungsgrenze empirisch ermittelte Daten oder theoretische Belastungsberechnungen bezüglich der mechanischen Komponenten des Antriebes verwendet werden.

10. Verfahren nach einem der voranstehenden Ansprüche, **dadurch gekennzeichnet, daß** die Belastungsgrenze in Abhängigkeit von der Temperatur wenigstens eines Teiles der Verstellvorrichtung ermittelt wird.

11. Verfahren nach Anspruch 10, **dadurch gekennzeichnet, daß** die Belastungsgrenze für jeden Verstellvorgang neu ermittelt wird.

12. Verfahren nach Anspruch 10, **dadurch gekennzeichnet, daß** die Belastungsgrenze während eines Verstellvorgangs kontinuierlich ermittelt wird.

13. Verfahren nach einem der voranstehenden Ansprüche, **dadurch gekennzeichnet, daß** bei der Festlegung der Belastungsgrenze die Streuung der über das mathematische Modell berechneten, aktuellen vom motorischen Antrieb erzeugten Belastung betragsmindernd berücksichtigt wird.

14. Verfahren nach einem der voranstehenden Ansprüche, **dadurch gekennzeichnet, daß** das mathematische Modell einen dynamischen Anteil aufweist, der die Einflüsse beim Beschleunigen und Abbremsen des Antriebs berücksichtigt.

15. Verfahren nach einem der voranstehenden Ansprüche, **dadurch gekennzeichnet, daß** das mathematische Modell einen Anteil aufweist, der das reale Kennfeld des eingesetzten Antriebs repräsentiert.

## Claims

1. Method for controlling and regulating a motor driven adjusting device, more particularly a window lifter, seat adjuster or a sun-roof, of a motor vehicle with an anti-jamming protection, wherein input variables of the motorised drive are continuously detected and the actual load of the adjusting device or motorised drive is determined through systems of equations which were set up using a mathematical model of the complete adjusting device including the drive, and on exceeding a predetermined load limit the motorised drive is switched off or regulated to a value below the load limit,
**characterised in that**
the continuously detected input variables are converted into individual force components (Fₘₒₜ, F_{Beschl}, Fᵣₑₛ, Fₛ₊ₕ) which contribute to increasing or reducing the overall load (F_{Einkl}) of the adjusting device or individual components of the adjusting device and which are entered with a positive sign into the calculation of the actual total load (F_{Einkl}) of the adjusting device or drive, which depends on whether the relevant force component (Fₘₒₜ, F_{Beschl}, Fᵣₑₛ, Fₛ₊ₕ) assists the adjusting movement of the adjusting device or drive or counteracts the adjusting movement of the adjusting device or drive.

2. Method according to claim 1, **characterised in that** as an input variable the speed (n) of a drive formed as an electric motor is sent both to a third dynamic system of equations (3) formed as a high pass filter, which takes into account a mechanical time constant and slide friction constant, and also together with a control signal (AS) of the electric motor as an input variable to a static system of equations (6) and that the force component (Fᵣₑₛ) issued by the third dynamic equation system (3) with negative sign and the motor force component (Fₘₒₜ) issued by the static equation system (6) with positive sign are supplied to a comparison member (5).

3. Method according to claim 2, **characterised in that** the comparison member (5) is connected to a high pass filter (7) which issues the maximum jamming force (Fₑᵢₙₖₗ) permissible.

4. Method according to claim 2, **characterised in that** an input variable (P) corresponding to the position of the device to be adjusted is entered into a dynamic system of equations (4) containing a table function and which issues a position-dependent adhesive friction force component (F_{S+H}) with negative sign to the comparison member (5) from which the maximum permissible jamming force (F_{Einkl}) is issued.

5. Method according to claim 1, **characterised in that** as an input variable the speed (n) of a drive formed as an electric motor is sent both to a third dynamic system of equations (3) formed as a high pass filter, which takes into account a mechanical time constant and slide friction constant, and also together with a control signal (AS) of the electric motor as an input variable to a second dynamic system of equations (2), that the force component (Fᵣₑₛ) issued by the third dynamic equation system (3) with negative sign and the motor force component (Fₘₒₜ) issued by the second dynamic equation system (2) with positive sign are supplied to a comparison member (5), that an input variable (P) corresponding to the position of the device to be adjusted is entered into a fourth dynamic system of equations (4) containing a table function and which issues a position-dependent adhesive friction force component (F_{S+H}) with negative sign to the comparison member (5) from which the maximum permissible jamming force (F_{Einkl}) is issued.

6. Method according to claim 5 **characterised in that** an input variable (Bᵥ) detecting the vertical acceleration of the window pane is supplied to a first dynamic system of equations (1) which takes into account the mass to be adjusted and which issues an acceleration force component F_{Beschl} with negative sign to the comparison member (5).

7. Method according to one of the preceding claims **characterised in that** at least a part of the parameters of the mathematical model is determined on the basis of the input variables actually detected or the time-dependent paths of the input variables.

8. Method according to one of the preceding claims, **characterised in that** at least a part of the parameters of the mathematical model is established on the basis of empirically determined data.

9. Method according to one of the preceding claims **characterised in that** empirically determined data or theoretical load calculations regarding the mechanical components of the drive are used when establishing the load limit.

10. Method according to one of the preceding claims **characterised in that** the load limit is determined in dependence on the temperature of at least one part of the adjusting device.

11. Method according to claim 10 **characterised in that** the load limit is determined anew for each adjusting process.

12. Method according to claim 10 **characterised in that** the load limit is determined continuously during an adjusting process.

13. Method according to one of the preceding claims **characterised in that** when establishing the load limit the mean variation of the actual load generated by the motorised drive and calculated through the mathematical model is taken into account reducing the amount.

14. Method according to one of the preceding claims **characterised in that** the mathematical model has a dynamic part which takes into account the influences during acceleration and braking of the drive.

15. Method according to one of the preceding claims **characterised in that** the mathematical model has a proportion which represents the actual characteristic field of the drive used.

## Revendications

1. Procédé de commande et de réglage d'un dispositif de réglage entraîné par moteur, en particulier d'un lève-glace électrique, d'un réglage des sièges ou d'un toit ouvrant, d'un véhicule avec une protection anti-pincement, sachant que des grandeurs d'entrée de l'entraînement motorisé sont enregistrées en continu et que la charge actuelle du dispositif de réglage ou de l'entraînement motorisé est déterminée par des systèmes d'équation qui ont été créés à l'aide d'un modèle mathématique de tout le dispositif de réglage, y compris de l'entraînement, et est coupée en cas de dépassement d'une limite de charge donnée de l'entraînement motorisé ou réglée à une valeur inférieure à la limite de charge,
**caractérisé en ce que**
les grandeurs d'entrée enregistrées en continu sont transformées en composants de force (F_{Mot}, F_{Accel}, F_{Res}, F_{S+H}) individuels participant à l'augmentation ou à la réduction de la charge totale (F_{Serr}) du dispositif de réglage ou des différents composants du dispositif de réglage et intervenant par signe dans la détermination de la charge totale actuelle (F_{Serr}) du dispositif de réglage ou de l'entraînement, lequel signe est défini suivant que les composants de force(F_{Mot}, F_{Accel}, F_{Res}, F_{S+H}) soutient le déplacement de réglage du dispositif de réglage ou de l'entraînement ou qu'il réagit à l'encontre du déplacement de réglage du dispositif de réglage ou de l'entraînement.

2. Procédé selon la revendication 1, **caractérisé en ce que** la vitesse de rotation (n) d'un entraînement configuré en tant qu'électromoteur est transmise comme grandeur d'entrée à un troisième système d'équation dynamique (3) configuré en tant que passe-haut qui prend en compte une constante de temps mécanique et une constante de friction de glissement ainsi que comme grandeur d'entrée, en association avec un signal de commande (AS) de l'électromoteur, à un système d'équation statique (6) et **en ce que** les composants de force (F_{Res}) transmis par le troisième système d'équation dynamique (3) sont amenés avec un signe négatif à un organe de comparaison (5) alors que les composants de force du moteur (F_{Mot}) transmis par le système d'équation statique (6) le sont avec un signe positif.

3. Procédé selon la revendication 2, **caractérisé en ce que** l'organe de comparaison (5) est relié à un passe-haut (7) qui dégage la force de serrage (Fserr) maximum autorisée.

4. Procédé selon la revendication 2, **caractérisé en ce qu'**une grandeur d'entrée (P) correspondant à la position du dispositif à régler est entrée dans un système d'équation (4) dynamique comprenant une fonction de table qui transmet avec un signe négatif un composant de force (F_{S+H}) de frottement par adhérence dépendant de la position à l'organe de comparaison (5) à partir duquel est émise la force de serrage (F_{Serr}) maximum autorisée.

5. Procédé selon la revendication 1, **caractérisé en ce que** la vitesse de rotation (n) d'un entraînement configuré en tant qu'électromoteur transmise de même comme grandeur d'entrée à un troisième système d'équation dynamique (3) configuré en tant que passe-haut qui prend en compte une constante de temps mécanique et une constante de friction de glissement ainsi que comme grandeur d'entrée, en association avec un signal de commande (AS) de l'électromoteur, à un deuxième système d'équation dynamique (2) et **en ce que** les composants de force (F_{Res}) transmis par le troisième système d'équation dynamique (3) sont amenés avec un signe négatif à un organe de comparaison (5) alors que les composants de force du moteur (F_{Mot}) transmis par le deuxième système d'équation dynamique (2) le sont avec un signe positif de sorte qu'une grandeur d'entrée (P) correspondant à la position du dispositif à régler est entrée dans un quatrième système d'équation (4) dynamique comprenant une fonction de table qui émet un composant de force (F_{S+H}) de frottement par adhérence dépendant de la position avec un signe négatif à l'organe de comparaison (5) à partir duquel est émise la force de serrage (F_{Serr}) maximum autorisée.

6. Procédé selon la revendication 5, **caractérisé en ce qu'**une grandeur d'entrée (Bᵥ) enregistrant l'accélération verticale de la vitre électrique est amenée dans un premier système d'équation dynamique (1) prenant en compte le poids à régler et transmettant à l'organe de comparaison (5) un composant de force d'accélération F_{Accel} avec un signe négatif.

7. Procédé selon l'une quelconque des revendications précédentes, **caractérisé en ce qu'**au moins une partie des paramètres du modèle mathématique est calculée sur la base des grandeurs d'entrée enregistrées actuellement ou des variations dans le temps des grandeurs d'entrée.

8. Procédé selon l'une quelconque des revendications précédentes, **caractérisé en ce qu'**au moins une partie des paramètres du modèle mathématique est définie sur la base de données calculées empiriquement.

9. Procédé selon l'une quelconque des revendications précédentes, **caractérisé en ce que** des données calculées empiriquement ou des calculs de charge théoriques relatifs aux composants mécaniques de l'entraînement sont utilisés lors de la détermination de la limite de charge.

10. Procédé selon l'une quelconque des revendications précédentes, **caractérisé en ce que** la limite de charge est calculée en fonction de la température d'au moins une partie du dispositif de réglage.

11. Procédé selon la revendication 10, **caractérisé en ce que** la limite de charge est recalculée pour chaque processus de réglage.

12. Procédé selon la revendication 10, **caractérisé en ce que** la limite de charge est calculée en continue pendant une opération de réglage.

13. Procédé selon l'une quelconque des revendications précédentes, **caractérisé en ce que** la perte de charge de la charge actuelle générée par l'entraînement motorisé et calculée par le modèle mathématique est prise en compte lors de la détermination de la charge limite dont elle diminue la valeur absolue.

14. Procédé selon l'une quelconque des revendications précédentes, **caractérisé en ce que** le modèle mathématique comporte une partie dynamique qui prend en compte les influences lors de l'accélération ou du ralentissement de l'entraînement.

15. Procédé selon l'une quelconque des revendications précédentes, **caractérisé en ce que** le modèle mathématique comporte une partie qui représente le champ caractéristique réel de l'entraînement mis en place.
